# EUROPÄISCHE PATENTSCHRIFT

(11) **EP 1 218 419 B1**
(45) Veröffentlichungstag und Bekanntmachung des Hinweises auf die Patenterteilung: **16.03.2005**
(21) Anmeldenummer: 00962336.4
(22) Anmeldetag: 18.08.2000
(51) Int. Cl.: C08F 4/00, C08F 293/00

(54) **POLYMERISATIONSVERFAHREN**
POLYMERIZATION METHOD
PROCEDE DE POLYMERISATION

(30) Priorität: 19.08.1999 DE 19939328
(43) Veröffentlichungstag der Anmeldung: 03.07.2002
(73) Patentinhaber: BASF AKTIENGESELLSCHAFT, 67056 Ludwigshafen (DE)
(72) Erfinder: CHRISTIE, David, 68165 Mannheim (DE); HAREMZA, Sylke, 69151 Neckargemünd (DE); BRINKMANN-RENGEL, Susanne, 55270 Ober-Olm (DE); RAETHER, Roman, Benedikt, 67117 Limburgerhof (DE)
(74) Vertreter: Kinzebach, Werner, Dr.
(86) Internationale Anmeldenummer: PCT/EP2000/008093
(87) Internationale Veröffentlichungsnummer: WO 2001/014428

(56) Entgegenhaltungen:
- EP-A- 0 992 514
- WO-A-99/00426
- WO-A-99/44972
- DE-A- 19 651 307
- JP-A- 2 210 344
- US-A- 5 877 344
- PATENT ABSTRACTS OF JAPAN vol. 1997, no. 02, 28. Februar 1997 (1997-02-28) & JP 08 269117 A (ARAKAWA CHEM IND CO LTD), 15. Oktober 1996 (1996-10-15)
- BRIK M E: "Oxidation of Secondary Amines to Nitroxides with Oxone in Aqueous Buffered Solution" , TETRAHEDRON LETTERS,NL,ELSEVIER SCIENCE PUBLISHERS, AMSTERDAM, VOL. 36, NR. 31, PAGE(S) 5519-5522 XP004027536 ISSN: 0040-4039 Abbildung 7A

## Beschreibung

Die vorliegende Erfindung betrifft ein Verfahren der radikalisch initiierten Polymerisation von ethylenisch ungesättigten Monomeren in Gegenwart von Di-Nitroxylradikalen.

Es ist bekannt, N-Oxylradikale zur Kontrolle radikalisch initiierter Polymerisationen ethylenisch ungesättigter Monomere einzusetzen. Es sei z.B. auf die EP-A-0735052, WO 94/11412, US-A-5,322,912, US-A-5,412,047 und GB 1,124,009 verwiesen. Die Gegenwart der N-Oxylradikale, die selbst nicht in der Lage sind, eine radikalische Polymerisation zu initiieren, führt zu einer Verringerung des Polydispersitätsindexes des erhaltenen Polymerisats. Der kontrollierende Einfluss der N-Oxylradikale liegt vermutlich darin begründet, dass die N-Oxylradikale die reaktiven radikalischen Enden einer wachsenden Polymerisatkette reversibel terminieren. Hierdurch wird die stationäre Konzentration der wachsenden freien radikalischen Polymerisatkettenenden verringert, was die Möglichkeit eines irreversiblen Abbruchs des Kettenwachstums zweier wachsender Polymerisatkettenenden verringert. Dies führt im Mittel dazu, dass die Kettenlänge annähernd linear mit dem Polymerisationsumsatz zunimmt.

In der WO 99/00426 erfolgt die radikalisch initiierte wässrige Emulsionspolymerisation in Gegenwart eines stabilen N-Oxylradikals derart, dass man eine wässrige Polymerisatdispersion erhält, deren disperse Phase hauptsächlich aus Tröpfchen eines Durchmesssers kleiner/gleich 500 nm besteht.

Die JP 08269117 beschreibt die Herstellung eines hochmolekularen Polymers durch radikalische (Co-)Polymerisation von Vinylmonomeren in Gegenwart einer Verbindung mit 2 oder mehr Nitroxylradikal-Einheiten der Formel "I" bzw. "II". Insbesondere wird Bis(2,2,6,6-tetramethyl-4-piperidyl)sebacat verwendet.

Die DE 19651307 A1 offenbart die Verwendung von Mischungen (B), enthaltend N-Oxyl-Verbindungen sekundärer Amine ohne Wasserstoffatome an den α - C-Atomen, eine Eisenverbindung, gegebenenfalls Nitroverbindungen und Costabilisatoren, zur Inhibierung der vorzeitigen Poylmerisation von radikalisch polymerisierbaren Verbindungen wie vinylgruppen-haltige Verbindungen.

Die US 5,877,344 offenbart die Polymerisationsinhibierung ethylenisch ungesättigter Carboxylmonomere, wie Acryl- oder Methacrylsäure oder deren Ester, in Gegenwart oder Abwesenheit von Wasser durch Einwirkung einer Mischung von 2 oder mehr Nitroxiden. Einige dieser Mischungen zeigen eine synergistische Stabilisierungswirkung.

Die radikalische Polymerisation ethylenisch ungesättigter Monomere in Gegenwart von N-Oxylradikalen eröffnet ferner die Möglichkeit der Herstellung von Blockcopolymerisaten. Bei den mit den N-Oxylradikalen terminierten Polymerisatketten handelt es sich um sogenannte "lebende" Polymere, die erneutes Kettenwachstum zeigen, sobald nach dem Erliegen der Polymerisation weitere Monomere dazu gegeben werden. Auf diese Weise können leicht sequentielle Blockcopolymere hergestellt werden, ohne dass eine unerwünschte Pfropfung an anderen Stellen als den Kettenenden auftritt. Die einzelnen Blöcke der Blockcopolymere sind dabei hinsichtlich ihrer Länge genau definiert. Auf diese Weise lassen sich Copolymere mit ausgewogenem Eigenschaftsprofil herstellen.

Nachteilig ist bei der beschriebenen Vorgehensweise, dass die Herstellung von Triblock- oder höheren Blockcopolymerisaten drei oder mehrere nacheinander zu vollziehende einzelne Polymerisationsschritte erfordert. Dies ist angesichts der im Allgemeinen in Gegenwart der Nitroxylradikale erforderlichen hohen Reaktionszeiten unerwünscht.

Der vorliegenden Erfindung liegt daher die Aufgabe zugrunde, ein Verfahren anzugeben, nach dem auf einfache Weise Triblock- und höhere Blockcopolymerisate, insbesondere solche mit niedriger Polydispersität, erhältlich sind.

Erfindungsgemäß wird diese Aufgabe durch ein Verfahren der radikalisch initiierten Polymerisation ethylenisch ungesättigter Monomere gelöst, das dadurch gekennzeichnet ist, dass die Polymerisation in Gegenwart von Di-Nitroxylradikalen II 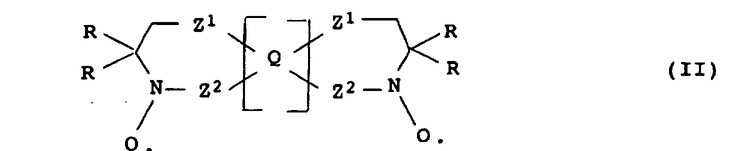 worin Q für 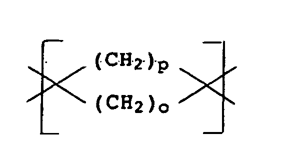
- Z¹: für eine chemische Bindung, O, S, NR, CO, COO, CONR oder CR₂;
- Z²: für eine chemische Bindung, CR₂CR₂ oder CR₂ steht, wobei Z¹ und Z² nicht gleichzeitig für eine chemische Bindung stehen,
- R: jeweils unabhängig für C₁-C₈-Alkyl, C₆-C₁₀-Aryl oder Heteroaryl steht, wobei Reste R, die nicht in α-Position zu einem Nitroxyl-Stickstoffatom stehen, auch für H stehen oder zwei Reste R, die an ein gemeinsames Kohlenstoffatom gebunden sind, zusammen mit dem Kohlenstoffatom, an das sie gebunden sind, einen 3- bis 8-gliedrigen gesättigten Ring bilden können und
- o, p: unabhängig voneinander für ganze Zahlen von 1 bis 6 stehen,
erfolgt und die Polymerisation thermisch, durch energiereiche Strahlung oder einen radikalischen Polymerisationsinitiator initiiert wird.

Di-Nitroxylradikale sind Verbindungen, die über zwei N-Oxylradikalzentren im Molekül verfügen. Es handelt sich um stabile freie Radikale, die bisweilen auch als beständige oder persistente Radikale bezeichnet werden. Sie können meist in kristalliner Form hergestellt und über mehrere Monate unzersetzt bei Raumtemperatur gelagert werden. In der Regel weisen die Di-Nitroxylradikale an allen α-Positionen zu den Stickstoffatomen, die die Radikalzentren tragen, von Wasserstoff verschiedene Substituenten auf.

Die Wirkungsweise der erfindungsgemäß eingesetzten Di-Nitroxylradikale bei der Herstellung eines Triblockcopolymers wird durch die nachstehenden Formelschemata erläutert: 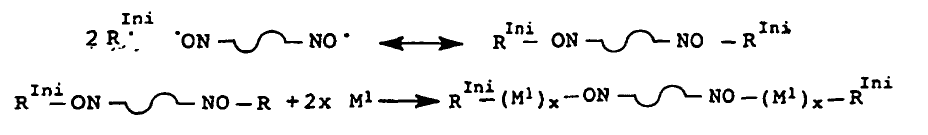 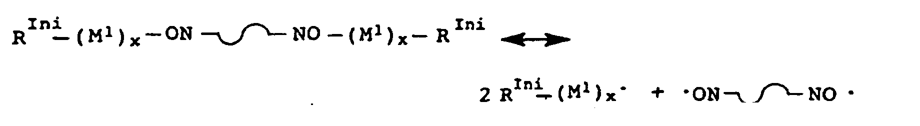 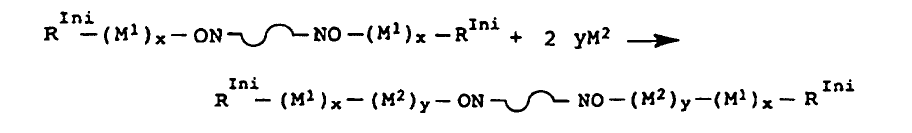 in denen R^{Ini} für den Rest eines radikalischen Initiators steht, M¹ und M² für unterschiedliche ethylenisch ungesättigte Monomere stehen und R^{Ini}-(M¹)ₓ· für ein aus Einheiten von M¹ bestehendes polymeres Radikal steht. In einem ersten Schritt werden zunächst Monomere M¹ in Gegenwart der Di-Nitroxylradikale polymerisiert. Die wachsenden Polymerketten R^{Ini}-(M¹)ₓ· können in einer reversiblen Reaktion eine kovalente Bindung zu den Radikalzentren der Di-Nitroxylradikale ausbilden. Aufgrund der Reversibilität der Reaktion kann die Bindung zwischen Polymerkette und Di-Nitroxylradikal homolytisch gespalten werden, wobei temporär ein aktives Radikalzentrum vorliegt, an das sich weitere Monomere addieren können. Im Ergebnis werden Monomereinheiten zwischen Polymerkette und Radikalzentrum "eingeschoben".

In einem zweiten Schritt werden von M¹ verschiedene Monomere M² zu dem intermediären Polymerisat der ersten Stufe gegeben. Die Polymerketten werden nun um Einheiten von M² verlängert, die sich ihrerseits zwischen Polymerkette und Radikalzentrum des Di-Nitroxylradikals einschieben.

Das auf diese Weise erhaltene Polymerisat enthält einen zentralen Block von Einheiten von M² und endständige Blöcke von Einheiten von M¹. Das erhaltene Blockcopolymerisat weist in seinem zentralen Block ein Strukturelement auf, das auf die eingesetzten Di-Nitroxylradikale zurückgeht.

Vorzugsweise weisen die eingesetzten Di-Nitroxylradikale symmetrische Struktur auf.

Soweit R in der Formel II für Heteroaryl steht, handelt es sich vorzugsweise um ein 5- oder 6-gliedriges Heteroaryl mit einem oder zwei unter O, S und N ausgewählten Heteroatomen, insbesondere um Pyridyl.

Erfindungsgemäß eingesetzte Di-Nitroxylradikale können z.B. die allgemeine Formel IIIb aufweisen, 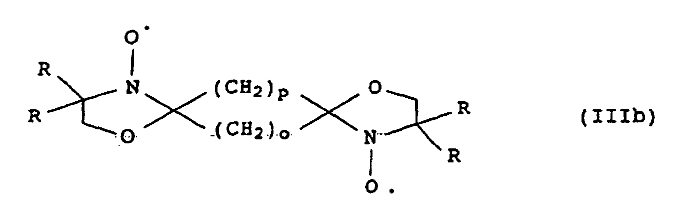 worin alle Symbole die bereits angegebene Bedeutung haben.

In den Verbindungen der Formel IIIb ist vorzugsweise o = p = 2 oder o = 1 und p = 2.

Die erfindungsgemäß eingesetzten Di-Nitroxylradikale können z.B. aus einer Vorläuferverbindung, die zwei sekundäre Amingruppen aufweist, durch Oxidation der NH-Gruppe zur N-Oxyl-Gruppe hergestellt werden. Als Oxidationsmittel kommen Peroxide, wie H₂O₂, tert-Butylhydroperoxid, Cumolhydroperoxid, Persäuren, wie Metachlorperbenzoesäure, α-Perchlorbenzoesäure, Peressigsäure, p-Nitroperbenzoesäure, Perbenzoesäure oder Magnesiummonoperoxiphthalat in Betracht. Die Oxidation kann in einem inerten Lösungsmittel, wie CH₂Cl₂, Petrolether, Toluol, Xylol oder Benzol erfolgen.

Andererseits können die erfindungsgemäß verwendeten Di-Nitroxylradikale auch durch Verknüpfung von Mono-Nitroxylradikalen mittels eines bifunktionellen Linkers hergestellt werden. Hierzu müssen die Mono-Nitroxylradikale in der Regel über eine reaktive Gruppe verfügen, die mit einer komplementären reaktiven Gruppe des Linkers umgesetzt werden kann. So kann das Mono-Nitroxylradikal beispielsweise über eine Hydroxylgruppe verfügen, die z.B. mit einer Dicarbonsäure oder einem aktivierten Derivat davon, z.B. dem Anhydrid, gegebenenfalls unter Zusatz eines wasserabspaltenden Mittels, wie Dicyclohexylcarbodiimid, umgesetzt werden kann.

Dem Fachmann der organischen Synthese sind zahlreiche Ausgangsmaterialien und Umsetzungen bekannt, die zu erfindungsgemäß verwendbaren Di-Nitroxylradikalen bzw. deren Amin-Vorläuferverbindungen führen.

Di-Nitroxylradikale der Formel IIIb können über folgende Reaktionssequenz erhalten werden, 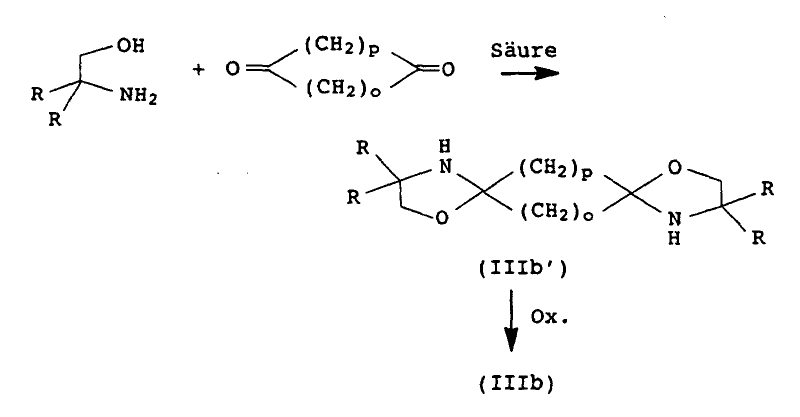 worin alle Symbole die bereits angegebene Bedeutung haben. Gemäß dem vorstehenden Schema wird ein substituiertes 2-Aminoethanol mit einem cyclischen Diketon unter Säurekatalyse zum Diamin IIIb' umgesetzt. Dieses kann durch oxidation mit einem der vorstehend angesprochenen Oxidationsmittel in ein Di-Nitroxylradikal der Formel IIIb überführt werden. Die Bedingungen zur Herstellung des Diamins können z.B. analog zu den in Chou, S. et al., J. Org. Chem. 39 (1974) 2356-2361 beschriebenen gewählt werden.

Ein spezielles Beispiel erfindungsgemäß eingesetzter Di-Nitroxylradikale ist:

3,3,11,11-Tetramethyl-1,9-dioxa-4,12-diaza-dispiro[4.2.4.2]-tetradecan-4,12-dioxyl.

Die Di-Nitroxylradikale können auch in Form von Radikalbildnern eingesetzt werden, die dadurch gekennzeichnet sind, dass durch homolytische Spaltung, z.B. durch Thermolyse, chemischer Bindungen als ein Fragment ein vorstehend beschriebenes Di-N-Nitroxylradikal entsteht. Sie weisen z.B. die allgemeine Formel 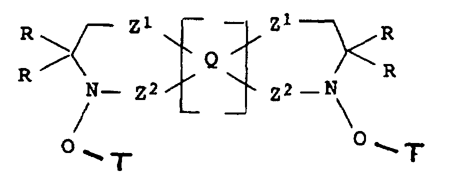 auf, in der Q, R, Z¹, Z², o und p die bereits angegebenen Bedeutungen besitzen und T für einen organischen Rest mit einem Molekulargewicht von 15 oder mehr, insbesondere 29 bis 500 000 steht. Vorzugsweise steht T für ein Radikal der Formel V, 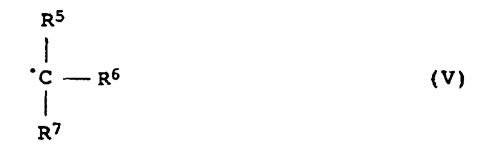 worin R⁵, R⁶ und R⁷ für Wasserstoff oder Alkyl (vorzugsweise C₁-C₄-Alkyl), eine gegebenenfalls z.B. mit Hydroxy, Halogen, Alkyl oder CN substituierte Phenylgruppe, eine Cyano- oder Carbonsäureestergruppe davon stehen. Besonders bevorzugte Radikale T sind Methyl, Ethyl, t-Butyl, Cyclohexyl, Octyl, Phenyl, C(CN)(CH₃)₂, CHPhCH₃ oder CH(CH₃)COOR (R ist C₁-C₄-Alkyl).

T kann außerdem für eine polymere Kette aus Einheiten ethylenisch ungesättigter Monomere bestehen. Radikalbildner, in denen T für eine polymere Kette steht, sind z.B. dadurch erhältlich, dass man eine geringe Menge an Monomeren mittels eines radikalischen Polymerisationsinitiators in Gegenwart eines Di-Nitroxylradikals radikalisch polymerisiert und anschliessend das Polymerisationsprodukt, z.B. durch Umfällen, isoliert. Das bei der Spaltung des Radikalbildners freiwerdende Radikal T kann als Initiator für die radikalisch initiierte Polymerisation wirken, so dass sich bei Verwendung des Radikalbildners als Di-Nitroxylradikal-Quelle ein weiterer Initiatorzusatz erübrigen kann.

Das erfindungsgemäße Verfahren kann als beliebige radikalisch initiierte Polymerisation, z.B. Lösungs-, Substanz-, Suspensions-, Fällungs-, Emulsions-, Miniemulsions- und Mikroemulsionspolymerisation durchgeführt werden. Es können auch inverse radikalische Emulsionspolymerisationen durchgeführt werden. Lösungs-, Substanz- und Miniemulsionspolymerisationstechniken sind im Allgemeinen bevorzugt. Gegebenenfalls können beliebige verdünnungsmittel, Lösungsmittel oder Dispersionsmedien eingesetzt werden, wobei wässrige Medien bevorzugt sind. Die Verfahren können absatzweise, semikontinuierlich und kontinuierlich durchgeführt werden.

Durch Zugabe von organischen Säuren, wie Camphersulfonsäure oder p-Toluolsulfonsäure oder durch Zugabe von Dimethylsulfoxid, 2-Fluorpyridin-1-meta-p-toluolsulfonat, 3-Indolyl-buttersäure bzw. Indolylessigsäure zum Polymerisationsgemisch kann die Polymerisationsgeschwindigkeit der erfindungsgemäßen radikalischen Polymerisationen in der Regel gesteigert werden.

Als erfindungsgemäß radikalisch initiiert polymerisierbare Monomere kommen alle diejenigen in Betracht, die wenigstens eine ethylenisch ungesättigte Gruppe aufweisen. Zu diesen Monomeren zählen Olefine, wie Ethylen, vinylaromatische Monomere wie Styrol, am Phenylrest substituiertes Styrol (z.B. mit einem oder zwei unter C₁-C₄-Alkyl, C₁-C₄-Alkoxy, C₁-C₄-Chloralkyl, Chlor, C₂-C₄-Acyloxy und Hydroxysulfonyl ausgewählten Substituenten), wie α-Methylstyrol, o-Chlorstyrol oder Vinyltoluole, p-Styrolsulfonat bzw. -sulfonsäure, p-Methoxystyrol, p-Chlormethylstyrol, p-Chlorstyrol, p-Acetoxystyrol, 1,1-Diphenylethen und 1,2-Diphenylethen, die am Phenylrest Substituenten (z.B. wie genannt) aufweisen können, Vinyl- und vinylidenhalogenide wie Vinyl- und Vinylidenchlorid, Ester aus Vinylalkohol und 1 bis 12 C-Atome aufweisenden Monocarbonsäuren wie Vinylacetat, Vinylpropionat, Vinyl-n-butyrat, Vinyllaurat sowie im Handel befindliche Monomere VEOVA® 9-11 (VEOVA X ist ein Handelsname der Firma Shell und steht für Vinylester von Carbonsäuren, die auch als Versatic® X-Säuren bezeichnet werden), Ester aus Allylalkohol und 1 bis 12 C-Atome aufweisenden Monocarbonsäuren wie Allylacetat, Allylpropionat, Allyl-nbutyrat und Allyllaurat, Ester aus vorzugsweise 3 bis 6 C-Atome aufweisenden α,β-monoethylenisch ungesättigten Mono- und Dicarbonsäuren, wie insbesondere Acrylsäure, Methacrylsäure, Maleinsäure, Fumarsäure und Itaconsäure, mit im Allgemeinen 1 bis 12, vorzugsweise 1 bis 8 und insbesondere 1 bis 4 C-Atome aufweisenden Alkanolen, wie besonders Acrylsäure- und Methacrylsäuremethyl-, -ethyl-, -n-butyl-, -iso-butyl, -tert-butyl- und -2-ethylhexylester, Glycidyl(meth)acrylat, Maleinsäuredimethylester oder Maleinsäure-n-butylester, Nitrile α,β-monoethylenisch ungesättigter Carbonsäuren wie Acrylnitril sowie Diene, insbesondere C₄₋₈-konjugierte Diene wie 1,3- Butadien und Isopren. Aber auch 3 bis 6 C-Atome aufweisende α,β-monoethylenisch ungesättigte Mono- und Dicarbonsäuren und deren Anhydride und Amide wie z.B. Acrylsäure, Methacrylsäure, Maleinsäure, Fumarsäure, Itaconsäure, Maleinsäureanhydrid, Acrylamid und Methacrylamid, N-Methylacrylamid, N-Ethylacrylamid, N-Isopropylacrylamid und N,N'-Dimethylacrylamid, ferner Vinylsulfonsäure und deren wasserlösliche Salze sowie N-Vinylpyrrolidon und 2- und 4-Vinylpyridin sind geeignet. Dies gilt ebenso für solche Monomere, die üblicherweise die innere Festigkeit der resultierenden Polymerisate erhöhen und die normalerweise eine Epoxy-, Hydroxy- oder N-Methylolgruppe aufweisen. Beispiele hierfür sind N-Alkylolamide von 3 bis 10 C-Atome aufweisenden α,β-monoethylenisch ungesättigten Carbonsäuren sowie deren Ether mit 1 bis 4 C-Atome aufweisenden Alkanolen, unter denen das N-Methylolacrylamid und das N-Methylolmethacrylamid ganz besonders bevorzugt sind. Es können auch mehrfach ungesättigte Monomere mit nichtkonjugierten Doppelbindungen, wie Ethylenglycoldi(meth)acrylat, Divinylbenzol, Allylvinylether, mitverwendet werden.

Davon sind vinylaromatische Monomere, Diene und Ester der Acrylund Methacrylsäure, insbesondere (Meth)acrylsäuremethyl-, -butylund -2-ethylhexylester, besonders bevorzugt.

In der Regel sind zur Initiierung der durch die erfindungsgemäßen Di-Nitroxylradikale kontrollierten Polymerisation radikalische Polymerisationsinitiatoren erforderlich. Zu diesem Zweck kommen alle diejenigen Initiatoren in Betracht, die in der Lage sind, radikalische Polymerisationen auszulösen. Es kann sich dabei um Peroxide, Hydroperoxide, Persäuren, Perester, Percarbonate, Persulfate und Azoverbindungen handeln. Beispielhafte geeignete Initiatoren sind unter anderem Wasserstoffperoxid, tert-Butylhydroperoxid, Di-tert-Butylperoxid, tert-Amylhydroperoxid, Kaliumpersulfat, Benzoylperoxid, Methylethylketonperoxid, Dilaurylperoxid und Azodiisobutyronitril. Es können auch Redoxinitiatoren verwendet werden, die aus einem Reduktionsmittel und einem radikalischen Initiator bestehen, z.B. Natriumbisulfit, Natriumsulfit, Ascorbinsäure, Iso-ascorbinsäure, Natriumformaldehydsulfoxylat und dergleichen in Kombination mit den vorstehend erörterten Initiatoren. Die Initiatoren oder Initiatorsysteme werden normalerweise in Mengen von 0,05 bis etwa 33 Gew.-%, bezogen auf das Gewicht der polymerisierbaren Monomere, eingesetzt. Ein bevorzugter Bereich beträgt 0,5 bis etwa 20 Gew.-% bezogen auf die polymerisierbaren Monomere.

Bezogen auf die molare Menge an radikalisch zu polymerisierenden Monomeren beträgt die für die erfindungsgemäße radikalische Polymerisation zu verwendende Menge an Di-Nitroxylradikalen oder Radikalbildnern in der Regel 10⁻⁴ bis 30 mol-%, vorzugsweise 0,01 bis 20 mol-%. Das molare Verhältnis zwischen Di-Nitroxylradikalen und radikalischem Polymerisationsinitiator wird in der Regel für eine kontrollierte radikalisch initiierte Polymerisation zu 0,5 bis 5, häufig zu 0,8 bis 4 gewählt.

Alternativ kann die radikalische Polymerisation auch thermisch oder durch energiereiche Strahlung, wie UV-Strahlung, initiiert werden. Die thermische Initiierung kommt z.B. bei der Polymerisation von vinylaromatischen Monomeren, wie Styrol, oder diese enthaltenden Monomergemischen in Betracht.

Das erfindungsgemäße Verfahren erfolgt in der Regel bei erhöhter Temperatur, z.B. 70 bis 200°C, vorzugsweise 80 bis 180°C. Zur Durchführung des Verfahrens kann z.B. ein Gemisch von (1) entweder (i) radikalischem Initiator und Di-Nitroxylradikal oder (ii) einem Di-Nitroxylradikalbildner und (2) wenigstens einem ethylenisch ungesättigten Monomer erwärmt werden. Die Reaktionszeiten betragen im Allgemeinen 30 min bis 60 h. Durch Abkühlen z.B. auf Raumtemperatur kann die Umsetzung beendet oder eingefroren werden. Anschließend kann das Polymerisat isoliert und gegebenenfalls gewaschen werden.

Es können beliebige übliche Polymerisationshilfsmittel, wie Emulgatoren, Entschäumer, Schutzkolloide usw. verwendet werden.

Wie erörtert, eignet sich das erfindungsgemäße Verfahren insbesondere zur Herstellung von Triblock- oder höheren Blockcopolymerisaten. Diese werden erhalten, indem sukzessive unterschiedliche Monomere oder Monomerengemische unterschiedlicher Zusammensetzung polymerisiert werden.

Ein Verfahren ist bevorzugt, bei dem man
a) ein Gemisch von (1) entweder (i) radikalischem Initiator und Di-Nitroxylradikal oder (ii) Di-Nitroxylradikalbildner und (2) wenigstens einem ersten ethylenisch ungesättigten Monomer unter Erhalt eines intermediären Polymerisates erwärmt,
b) das intermediäre Polymerisat gegebenenfalls isoliert,
c) zu dem intermediären Polymerisat wenigstens ein von dem ersten Monomer verschiedenes zweites ethylenisch ungesättigtes Monomer gibt und das Gemisch unter Erhalt eines Blockcopolymerisates erwärmt, und
d) das Blockcopolymerisat isoliert und gegebenenfalls wäscht und trocknet.

Um höhere Blockcopolymerisate zu erhalten, kann der Schritt c) einfach oder mehrfach wiederholt werden, wobei anstelle des zweiten ethylenisch ungesättigten Monomers ein drittes oder weiteres Monomer verwendet wird. Es können anstelle reiner Monomere auch Monomerengemische verwendet werden. Unter "verschiedenen Monomeren" werden auch Monomerengemische unterschiedlicher Zusammensetzung verstanden. Die Blöcke eines erfindungsgemäß erhaltenen Blockpolymers können demzufolge Homo- oder Copolymerblöcke darstellen.

Die Isolierung des intermediären Polymerisates wird dann empfohlen, wenn eine möglichst hohe Reinheit, scharfe Blockgrenzen oder eine hohe Homogenität innerhalb der Blöcke angestrebt sind.

Durch die Isolierung des intermediären Polymerisates wird verhindert, dass unumgesetztes erstes Monomer in den sich bildenden Block des zweiten Monomers eingebaut wird. Eine Isolierung des intermediären Polymerisats oder des Blockcopolymerisats kann z.B. durch Ausfällen erfolgen. Eine Isolierung des intermediären Polymerisats ist in der Regel wünschenswert, wenn der Polymerumwandlungsgrad des ersten Monomers gering ist, z.B. weniger als etwa 60 Gew.-% oder weniger als etwa 90 Gew.-% beträgt.

Folgende Kombinationen von ersten und zweiten ethylenisch ungesättigten Monomeren sind bevorzugt: Styrol-b-Acrylate; Styrolb-Styrol/Acrylate; Acrylnitril-b-Styrol; Styrol-b-Styrol/Acrylnitril; Acrylnitril/Styrol-b-Acrylate; Styrol-b-Styrol/Butadien; Acrylnitril/Styrol-b-Butadien; Acrylnitril-b-Butadien/Styrol; Acrylnitril/Styrol-b-Butadien/Styrol und Methylmethacrylat-b-Butylacrylat. Die Blockgrenze ist durch das Symbol "-b-" gekennzeichnet; der Schrägstrich gibt an, dass der jeweilige Block von einem im Wesentlichen statistischen Copolymer der genannten Monomere gebildet wird.

Nach dem erfindungsgemäßen Verfahren können mit Vorteil thermoplastische Elastomere und schlagzähmodifizierte Thermoplaste hergestellt werden. Erfindungsgemäß hergestellte Polymere und Blockcopolymere eignen sich zur Herstellung von Formkörpern, Folien und Schäumen sowie als Bindemittel für Beschichtungen und Anstrichmittel. Sie eignen sich weiter als Schlagzähmodifizierungsmittel, Weichharze bzw. Klebrigmacher, Dispergiermittel, Emulgatoren, Phasenvermittler und Schutzkolloide.

Die Erfindung betrifft außerdem die nach dem erfindungsgemäßen Verfahren erhältlichen Polymerisate, die z.B. 1 bis 500 000, vorzugsweise 2 bis 100 000, Monomereinheiten umfassen können.

Die Erfindung wird durch die folgenden Beispiele näher veranschaulicht.

### Beispiel 1 (Herstellung von Di-Nitroxylradikalen) / (Referenzbeispiel)

### a) N,N'-Bis(1-oxyl-2,2,6,6-tetramethylpiperidin-4-yl)-N,N'-bis-formyl-1,6-diaminohexan

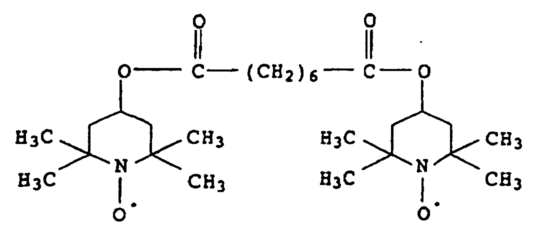

Eine Lösung von 337,5 g (0,75 mol) N,N'-Bis-[2,2,6,6-tetramethylpiperidin-4-yl]-N,N'-bis-formyl-1,6-diaminohexan und 600 ml Methanol wurde mit 0,15 g MgSO₄ versetzt. Bei 67°C wurden 600 ml einer 30%igen H₂O₂-Lösung (5,87 mol) innerhalb von 6 h zugetropft. Anschliessend erhöhte man die Temperatur auf 81°C und hielt den Ansatz bei dieser Temperatur für weitere 6 h, wobei der pH-Wert von 7,8 durch Zudosierung einer 50%igen KOH-Lösung konstant gehalten wurde. Anschließend wurde der pH-Wert durch Zugabe von KOH-Lösung auf 9,0 eingestellt. Nachdem der Ansatz für weitere 2 h bei diesem pH-Wert belassen worden war, destillierte man das Methanol ab, wobei das Produkt ausfiel. Es wurde mit Wasser nachgewaschen und getrocknet.

Charakterisierungen zeigen, dass das erhaltene Produkt zu etwa 60 mol-% die Di-Nitroxylverbindung obiger Formel enthält.

### b) Bis(1-oxy)-2,2,6,6-tetramethylpiperidin-4-yl)-sebacat

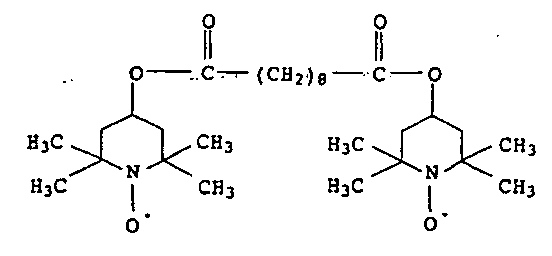

Die Nitroxylverbindung wurde entsprechend der Schrift US-4,665,185 ("Example 7", erster Teil der dort beschriebenen Synthese des entsprechenden Hydroxylamins) unter Einsatz der zugrunde liegenden Aminverbindung und Verwendung von Mo(CO)₆ und Tertiärbutylhydroperoxid im Methylenchlorid als Lösungsmittel hergestellt und durch Umkristallisation aus einem Ethanol/Wasser-Gemisch in etwa 90%iger Ausbeute erhalten.

### Beispiel 2a (Polymerisationsbeispiel) (nicht erfindungsgemäß)

Benzoylperoxid (0,081 g) und 0,140 g des Diradikals von Beispiel 1b wurden in einem Reagenzglas in Styrol (10,0 g) gelöst. Das Gemisch wurde 7 Stunden auf 130°C erwärmt. Man isolierte das Polymer und analysierte es durch Gelpermeationschromatographie. Die Ergebnisse sind in der nachstehenden Tabelle zusammengefasst.

| Monomer | Umsatz(%) | <Mₙ> (g mol⁻¹) | <M_{w}>(g mol⁻¹) | Polydispersität |
|---|---|---|---|---|
| Styrol | 11,7 | 2988 | 4886 | 1,6 |

### Beispiel 2b (nicht erfindungsgemäß)

Benzoylperoxid (0,081 g) und 0,132 g Di-Nitroxylradikal aus Beispiel 1a wurden in einem Reagenzglas in Styrol (10,0 g) gelöst. Das Gemisch wurde 7 h auf 130°C erwärmt. Man isolierte das Polymer und analysierte es durch Gelpermeationschromatographie. Die Ergebnisse sind in der nachstehenden Tabelle zusammengefasst.

| Monomer | Umsatz(%) | <Mₙ> (g mol⁻¹) | <M_{w}> (g mol⁻¹) | Polydispersität |
|---|---|---|---|---|
| Styrol | 9,2 | 2108 | 3561 | 1,7 |

### Beispiel 3 (nicht erfindungsgemäß)

Styrol (5,0 g), Benzoylperoxid (0,012 g) und Di-Nitroxylradikal aus Beispiel 1b (0, 018 g) wurden in einem Reagenzglas vorgelegt und mit Stickstoff gespült. Anschließend wurde der Ansatz 4 h lang in ein Ölbad mit 130°C eingestellt. Danach ließ man über Nacht abkühlen. Man gab n-Butylacrylat (6,16 g) dazu, spülte mit Stickstoff und stellte das Reagenzglas erneut 4 h lang in ein Ölbad mit 130°C. Das erhaltene Polymer wurde isoliert und durch Gelpermeationschromatographie analysiert. Die Ergebnisse sind in der nachstehenden Tabelle zusammengefasst.

### Beispiel 4 (nicht erfindungsgemäß)

Styrol (5,0 g), Benzoylperoxid (0,012 g) und Di-Nitroxylradikal aus Beispiel 1b (0,018 g) wurden in einem Reagenzglas vorgelegt und mit Stickstoff gespült. Anschließend wurde das Reagenzglas 4 h lang in ein Ölbad mit 130°C eingestellt. Danach wurde über Nacht auf Raumtemperatur abgekühlt. Man gab 2-Ethylhexylacrylat (8,86 g) dazu, spülte erneut mit Stickstoff und stellte das Reagenzglas weitere 4 h lang in ein Ölbad mit 130°C. Das erhaltene Polymer wurde isoliert und durch Gelpermeationschromatographie analysiert. Die Ergebnisse sind in der nachstehenden Tabelle zusammengefasst.

### Beispiel 5 (nicht erfindungsgemäß)

Styrol (5,0 g), Benzoylperoxid (0,012 g) und Di-Nitroxylradikal aus Beispiel 1a (0,018 g) wurden in einem Reagenzglas vorgelegt und mit Stickstoff gespült. Anschließend wurde der Ansatz 4 h lang in ein Ölbad mit 130°C eingestellt. Danach ließ man über Nacht abkühlen. Man gab n-Butylacrylat (6,16 g) dazu, spülte mit Stickstoff und stellte das Reagenzglas erneut 4 h lang in ein Ölbad mit 130°C. Das erhaltene Polymer wurde isoliert und durch Gelpermeationschromatographie analysiert. Die Ergebnisse sind in der nachstehenden Tabelle zusammengefasst.

### Beispiel 6 (nicht erfindungsgemäß)

Styrol (5,0 g), Benzoylperoxid (0,012 g) und Di-Nitroxylradikal aus Beispiel 1a (0,018 g) wurden in einem Reagenzglas vorgelegt und mit Stickstoff gespült. Anschließend wurde das Reagenzglas 4 h lang in ein Ölbad mit 130°C eingestellt. Danach wurde über Nacht auf Raumtemperatur abgekühlt. Man gab 2-Ethylhexylacrylat (8,86 g) dazu, spülte erneut mit Stickstoff und stellte das Reagenzglas weitere 4 h lang in ein Ölbad mit 130°C. Das erhaltene Polymer wurde isoliert und durch Gelpermeationschromatographie analysiert. Die Ergebnisse sind in der nachstehenden Tabelle zusammengefasst.

**Tabelle**

| Bsp. | Monomere | Umsatz (%) | <Mₚₑₐₖ> | <Mₙ> | <M_{w}> | Polydispersität |
|---|---|---|---|---|---|---|
| 3 | Styrol/n-BA | 44,4 | 140 100 | 62 440 | 124 600 | 2,0 |
| 4 | Styrol/EHA | 34,8 | 133 400 | 59 790 | 117 000 | 1,9 |
| 5 | Styrol/n-BA | 44,4 | 137 000 | 62 610 | 125 400 | 2,0 |
| 6 | Styrol/EHA | 31,8 | 124 100 | 65 870 | 117 200 | 1,8 |

### Beispiel 7

1,194 g eines Di-Nitroxylradikals der nachstehend gezeigten Formel und 0,855 g Dibenzoylperoxid wurden in 360 g Styrol gelöst und in einen Kessel gegeben. Danach wurde mit 1 000 ml Cyclohexan versetzt und 1 h lang auf 95°C erwärmt. Danach wurde die Temperatur auf 130°C erhöht und 23 h bei dieser Zeit gehalten. Umsatz: 59,5%, Mₙ = 29 800, PDI = 1,59.

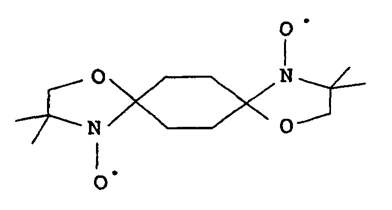

### Beispiel 8

1,194 des in Beispiel 7 verwendeten Di-Nitroxylradikals und 0,885 g Dibenzoylperoxid wurden in 360 g Styrol gelöst und in einem Stahlkessel vorgelegt. Danach wurde mit 1 000 ml Cyclohexan versetzt und 1 h lang auf 95°C erwärmt. Danach wurde die Temperatur auf 130°C erhöht und 24 h bei dieser Zeit gehalten. Anschließend gab man 125 g 1,3-Butadien dazu und polymerisierte weitere 24 h bei 130°C. Mₙ = 40 300, PDI = 1,67. In der Differentialscanning-Calorimetrie (DSC) wurden zwei Glasstufen bei T_{g}¹ = 13°C und T_{g}² = 81°C beobachtet.

### Beispiel 9

0,2 g des in Beispiel 7 verwendeten Di-Nitroxylradikals, 0,17 g Dibenzoylperoxid (70 %ig) und 70 g Styrol wurden gemischt. Man erwärmte das Gemisch auf 135°C und ließ 5 bzw. 8 h polymerisieren. Das erhaltene Polymer wurde durch Fällung in Methanol isoliert und im Vakuum getrocknet. Umsatz: 35 % (nach 5 h) bzw. 63 % (nach 8 h), Mₙ = 28 400 g/mol (nach 5 h) bzw. 40 600 g/mol (nach 8 h), PDI = 1,79 (nach 5 h) bzw. 1,77 (nach 8 h).

### Beispiel 10

0,1 g des in Beispiel 7 verwendeten Di-Nitroxylradikals, 0,17 g Dibenzoylperoxid (70 %ig) und 70 g Styrol wurden gemischt. Man erwärmte das Gemisch auf 135°C und ließ 2 bzw. 3 h polymerisieren. Das erhaltene Polymer wurde durch Fällung in Methanol isoliert und im Vakuum getrocknet. Umsatz: 59 % (nach 2 h) bzw. 71 % (nach 3 h), Mₙ = 54 900 g/mol (nach 2 h) bzw. 59 900 g/mol (nach 3 h), PDI = 1,86 (nach 2 h) bzw. 1,89 (nach 3 h).

### Beispiel 11 (nicht erfindungsgemäß)

2,033 g des Di-Nitroxylradikals aus Beispiel 1b und 0,855 g Dibenzoylperoxid wurden in 360 g Styrol gelöst und in einem Stahlkessel mit 1 000 ml Cyclohexan versetzt. Das Reaktionsgemisch wurde 1 h lang auf 95°C aufgewärmt und dann 24 h lang bei 130°C polymerisiert. Umsatz: 39,2%, Mₙ = 17 800, PDI = 1,85.

## Patentansprüche

1. Verfahren der radikalisch initiierten Polymerisation ethylenisch ungesättigter Monomere, **dadurch gekennzeichnet, dass** die Polymerisation in Gegenwart von Di-Nitroxylradikalen II 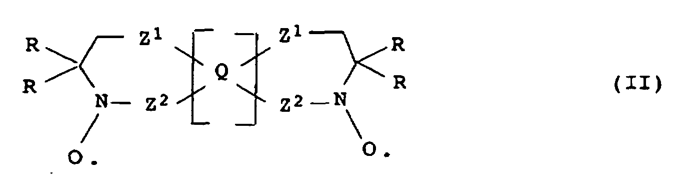 worin Q für 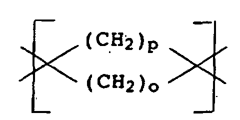
Z¹ für eine chemische Bindung, O, S, NR, CO, COO, CONR oder CR₂;
Z² für eine chemische Bindung, CR₂CR₂ oder CR₂ steht, wobei Z¹ und Z² nicht gleichzeitig für eine chemische Bindung stehen,
R jeweils unabhängig für C₁-C₈-Alkyl, C₆-C₁₀-Aryl oder Heteroaryl steht, wobei Reste R, die nicht in α-Position zu einem Nitroxyl-Stickstoffatom stehen, auch für H stehen oder zwei Reste R, die an ein gemeinsames Kohlenstoffatom gebunden sind, zusammen mit dem Kohlenstoffatom, an das sie gebunden sind, einen 3- bis 8-gliedrigen gesättigten Ring bilden können und
o, p unabhängig voneinander für ganze Zahlen von 1 bis 6 stehen,
erfolgt und die Polymerisation thermisch, durch energiereiche Strahlung oder einen radikalischen Polymerisationsinitiator initiiert wird.

2. Verfahren nach Anspruch 1, **dadurch gekennzeichnet, dass** die Di-Nitroxylradikale die allgemeine Formel IIIb aufweisen, 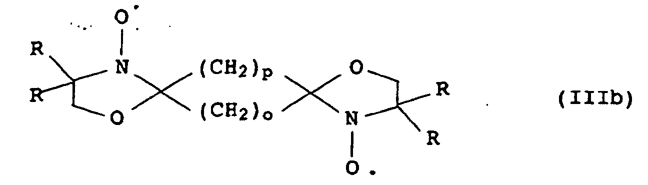 worin alle Symbole die in Anspruch 1 angegebene Bedeutung haben.

3. Verfahren nach einem der vorhergehenden Ansprüche, **dadurch gekennzeichnet, dass** sukzessive unterschiedliche Monomere oder Monomerengemische unterschiedlicher Zusammensetzung polymerisiert werden.

4. Verfahren nach einem der vorhergehenden Ansprüche, **dadurch gekennzeichnet, dass** man die Di-Nitroxylradikale in einer Menge von 10⁻⁴ bis 30 mol%, bezogen auf die molare Menge zu polymerisierender Monomere, verwendet.

5. Polymerisat, erhältlich nach dem Verfahren nach einem der Ansprüche 1 bis 4.

6. Verwendung des Polymerisats nach Anspruch 5, zur Herstellung von Formkörpern, Folien, Schäumen; als Bindemittel für Beschichtungen oder Anstrichmittel; als Schlagzähmodifizierungsmittel, Weichharz, Dispergiermittel, Emulgator, Phasenvermittler oder Schutzkolloid.

7. Formkörper, Folie oder Schaum, enthaltend ein Polymerisat nach Anspruch 5.

## Claims

1. A process for the free radical polymerization of ethylenically unsaturated monomers, wherein the polymerization is effected in the presence of dinitroxyl radicals II 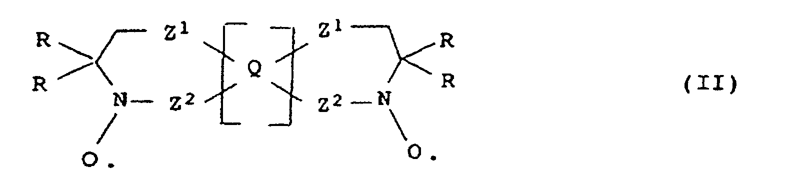 in which Q is 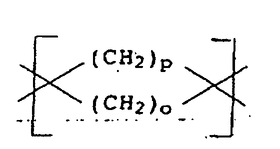
Z¹ is a chemical bond, O, S, NR, CO, COO, CONR or CR₂;
Z² is a chemical bond, CR₂CR₂ or CR₂, Z¹ and Z² not simultaneously being a chemical bond,
R, in each case independently, are C₁-C₈-alkyl, C₆-C₁₀-aryl or hetaryl, where radicals R which are not in the α-position relative to a nitroxyl nitrogen atom are also H, or two radicals R which are bonded to a common carbon atom can, together with the carbon atom to which they are bonded, form a 3- to 8-membered saturated ring, and
o and p, and p, independently of one another, are integers from 1 to 6,
and the polymerization is initiated thermally, by high-energy radiation or by a free radical polymerization initiator.

2. A process as claimed in claim 1, wherein the dinitroxyl radicals have the formula IIIb 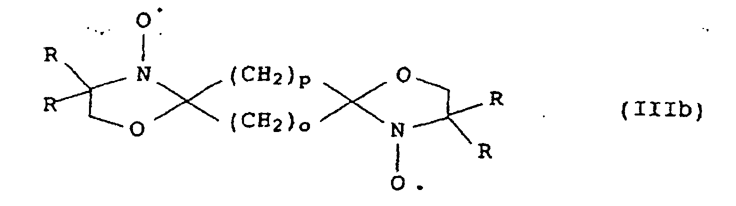 in which all symbols have the meanings stated in claim 1.

3. A process as claimed in either of the preceding claims, wherein successive different monomers or monomer mixtures of different composition are polymerized.

4. A process as claimed in any of the preceding claims, wherein the dinitroxyl radicals are used in an amount of from 10⁻⁴ to 30 mol%, based on the molar amount of monomers to be polymerized.

5. A polymer obtainable by a process as claimed in any of claims 1 to 4.

6. The use of a polymer as claimed in claim 5 for the production of moldings, films, foams; as a binder for coatings or surface coating agents; as an impact modifier, soft resin, dispersant, emulsifier, phase compatibilizer or protective colloid.

7. A molding, film or foam, comprising a polymer as claimed in claim 5.

## Revendications

1. Procédé de polymérisation initiée par voie radicalaire de monomères éthyléniquement insaturés, **caractérisé en ce que** la polymérisation a lieu en présence de radicaux di-nitroxyle II : 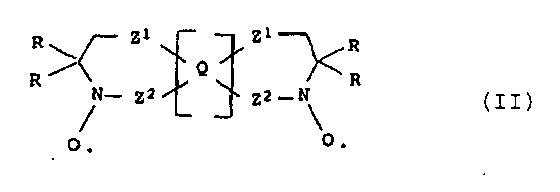 où Q représente 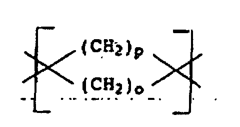
Z¹ représente une liaison chimique, O, S, NR, CO, COO, CONR ou CR₂,
Z² représente une liaison chimique, CR₂CR₂ ou CR₂, Z¹ et Z² ne représentant pas simultanément une liaison chimique,
R représente chaque fois, indépendamment, un groupe alkyle en C₁-C₈, aryle en C₆-C₁₀ ou hétéroaryle, les radicaux R, qui ne sont pas en position α par rapport à un atome d'azote de nitroxyle, pouvant aussi représenter H ou deux radicaux R, qui sont liés à un atome de carbone commun, pouvant former conjointement à l'atome de carbone auquel ils sont fixés un cycle saturé de 3 à 8 membres, et
o, p représentent indépendamment l'un de l'autre des nombres entiers de 1 à 6,
et **en ce que** la polymérisation est initiée thermiquement, par un rayonnement riche en énergie ou par un initiateur de polymérisation radicalaire.

2. Procédé suivant la revendication 1, **caractérisé en ce que** les radicaux di-nitroxyle présentent la formule générale IIIb : 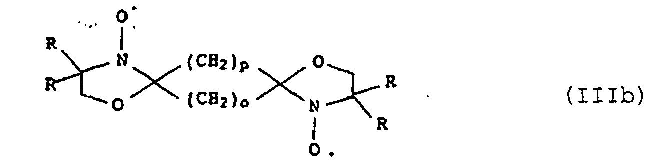 dans laquelle tous les symboles ont la signification indiquée dans la revendication 1.

3. Procédé suivant l'une des revendications précédentes, **caractérisé en ce que** des monomères différents successifs ou des mélanges de monomères de compositions différentes sont polymérisés.

4. Procédé suivant l'une des revendications précédentes, **caractérisé en ce qu'**on utilise les radicaux di-nitroxyle en une quantité de 10⁻⁴ à 30 moles %, par rapport à la quantité molaire de monomères en train de polymériser.

5. Polymère, que l'on peut obtenir selon le procédé suivant l'une des revendications 1 à 4.

6. Utilisation du polymère suivant la revendication 5, pour la fabrication de corps façonnés, de feuilles, de mousses, comme liant pour des enductions ou des peintures, comme agent de modification de la résistance aux chocs, résine molle, agent dispersant, agent émulsionnant, intermédiaire de phases ou colloïde de protection.

7. Corps façonné, feuille ou mousse, contenant un polymère suivant la revendication 5.
